# EUROPÄISCHE PATENTSCHRIFT

(11) **EP 4 015 857 B1**
(45) Veröffentlichungstag und Bekanntmachung des Hinweises auf die Patenterteilung: **13.09.2023**
(21) Anmeldenummer: 20214036.4
(22) Anmeldetag: 15.12.2020
(51) Int. Cl.: F16D 1/116, F16D 1/08, B01F 27/213

(54) **VORRICHTUNG ZUR REVERSIBLEN VERBINDUNG EINES RÜHRWERKZEUGES MIT EINEM RÜHRWERK**
DEVICE FOR REVERSIBLY CONNECTING A MIXING TOOL TO A MIXER
DISPOSITIF DE RACCORDEMENT RÉVERSIBLE D'UN OUTIL AGITATEUR DOTÉ D'UN AGITATEUR

(43) Veröffentlichungstag der Anmeldung: 22.06.2022
(73) Patentinhaber: Siemens Healthcare Diagnostics Products GmbH, 35041 Marburg (DE)
(72) Erfinder: Klingelhoefer, Armin, 35075 GLADENBACH (DE)

(56) Entgegenhaltungen:
- EP-A1- 0 175 088
- WO-A1-2016/170275
- DE-U1-202010 014 935

## Beschreibung

Die Erfindung liegt auf dem Gebiet der Herstellung von Reagenzien für die in vitro-Diagnostik. Gegenstand der Erfindung ist eine Vorrichtung zur reversiblen Verbindung eines Rührwerkzeuges mit einem Rührwerk mittels eines Kupplungsmechanismus.

Zahlreiche Nachweis- und Analyseverfahren zur Bestimmung physiologischer Parameter in Körperflüssigkeitsproben oder anderen biologischen Proben werden heute automatisiert in großer Anzahl in automatischen Analysegeräten, die auch als in vitro-Diagnostiksysteme bezeichnet werden, durchgeführt. Beispielsweise können solche Analysegeräte auch dazu eingerichtet sein, um Nachweis- und Analyseverfahren zur Bestimmung von Viren in Proben, wie z.B. severe acute respiratory syndrome coronavirus 2 (SARS-CoV-2) und/oder zur Bestimmung von Antikörpern gegen z.B. SARS-CoV-2 durchzuführen. Hierzu werden für die verschiedenen Nachweis- und Analyseverfahren spezielle Reagenzien benötigt, die in größeren Volumina industriell hergestellt werden.

Dabei werden bei der Herstellung von Bulklösungen für diagnostische Reagenzien die Inhaltsstoffe in z.B. wässrigen Lösungen häufig über Rühr- und Mischvorgängen gelöst. Dies geschieht teilweise in offenen Behältern, die mit Rührwerken ausgestattet sind. Dabei werden bisher gewöhnlich Rührwerkzeuge mit Rührflügeln an den Rührwerken mit Schlüsselbohrfuttern befestigt. Dabei wird der Schaft des Rührwerkzeugs mit den Rührflügeln im Bohrfutter des Rührwerkes mittels eines Schüssels festgeklemmt. Alternativ können Rührwerke teilweise auch mit Schnellspannfuttern ausgestattet sein.

Durch mechanische Betätigungen beim Wechsel der Rührwerkzeuge besteht die Gefahr, dass durch z.B. Abrieb Metallspäne entstehen, die in das Produkt fallen können und somit die Gefahr einer Verunreinigung besteht. Weiter lagern sich u.a. Aufsteigende Dämpfe und Aerosole am Bohrfutter ab, die bei der Betätigung des Rührvorgangs unbeabsichtigt wieder zurück in den Kessel oder Tank fallen können.

Aufgrund der aufsteigenden Dämpfe korrodieren die Bohrfutter häufig sehr schnell und wirken daher dann verdreckt und unhygienisch. Auch kann sich vor, während oder nach einem Rührvorgange ein Rührwerkzeug mit Rührflügeln vom Bohrfutter unbeabsichtigt lösen, so dass dann das herausfallende Rührwerkzeug bzw. dessen Rührflügel z.B. den Boden des Kessels oder Tanks stark beschädigen kann. Nach solchen Beschädigungen muss u.a. der Behälter aufwendig neu geschliffen oder beschichtet werden. Die Kessel und Tanks sind aufgrund der Beschädigungen, die teilweise nicht vollständig reparierbar sind, und der dadurch veränderten Oberflächenbeschaffenheiten, die z.B. aufgebrochene Oberflächen umfassen, weiter sehr schwer zu reinigen und die Rühr- und Mischvorgänge können die Produktsicherheit entsprechend kritisch beeinträchtigen.

Die Druckschrift EP 0 175 088 A1 offenbart eine Kupplung mit einer ersten Aufnahme für eine Welle eines Rührwerks zur kraftschlüssigen Verbindung der Kupplung mit der Welle und eine zweite Aufnahme für einen Adapter für ein Rührwerkzeug zur lösbaren, kraftschlüssigen Verbindung der Kupplung mit dem Adapter.

Es ist daher Aufgabe der Erfindung eine Vorrichtung zur reversiblen Verbindung eines Rührwerkzeuges mit einem Rührwerk zur Verfügung zu stellen, die es ermöglicht, die Gefahr von unbeabsichtigten Verunreinigungen bei Rühr- und Mischvorgängen bei der Herstellung von diagnostischen Reagenzien zu vermindern oder möglichst vollständig zu verhindern um eine erhöhte Produktsicherheit zu ermöglichen.

**Diese Aufgabe wird erfindungsgemäß durch die im Folgenden beschriebenen Gegenstände und Verfahren gelöst.**

Die Erfindung geht dabei von der Überlegung aus, dass eine lösbaren, kraftschlüssigen Verbindung zwischen einer Kupplung und einem Adapter zur Übertragung eines Drehmoments mit Mitteln zur Arretierung zu erreichen ist, die einerseits ein unbeabsichtigtes Herausfallen des Adapters aus der Kupplung verhindern, als auch eine verdrehfeste Verbindung zwischen Kupplung und Adapter bewirken, sowie auch gleichzeitig die Nachteile und Risiken der bisherigen Lösungen vermeidet.

Die Kupplung weist eine erste Aufnahme für eine Welle eines Rührwerks zur kraftschlüssigen Verbindung der Kupplung mit der Welle auf und eine zweite Aufnahme für den Adapter für ein Rührwerkzeug zur lösbaren, kraftschlüssigen Verbindung der Kupplung mit dem Adapter, wobei der Adapter mit einem Rührwerkzeug kraftschlüssig verbindbar oder verbunden ist. So wird insbesondere ermöglicht, dass ein Drehmoments von dem Rührwerk auf das Rührwerkzeug übertragen werden kann.

Die zweite Aufnahme umfasst eine im Wesentlichen kreiszylinderförmige Ausnehmung mit einer ersten gedachten Längsachse, in die ein erstes Schaftende des Adapters formschlüssig in Richtung der ersten Längsachse einsteckbar ist.

Das erste Schaftende weist eine zweite gedachten Längsachse auf und wobei das erste Schaftende entlang der zweiten Längsachse einen ersten Abschnitt und einen zweiten Abschnitt umfasst, wobei der erste Abschnitt eine kreiszylindrische Form mit einem runden Querschnitt symmetrisch zur zweiten Längsachse aufweist und wobei der zweite Abschnitt einen polygonen Querschnitt aufweist, und wobei das erste Schaftende im ersten Abschnitt eine umlaufende Vertiefung aufweist, die bevorzugt als konkave Vertiefung in Form einer Nut ausgestaltet ist.

Die Kupplung umfasst die Mittel zur Arretierung des in die zweite Aufnahme eingesteckten ersten Schaftendes. Die Mittel zur Arretierung umfassen eine Arretiervorrichtung mit einer konvexen Struktur zum Eingreifen in die umlaufende Vertiefung im ersten Schaftende um ein unbeabsichtigtes Herausfallen aus der Kupplung des in die Kupplung eingesteckten ersten Schaftendes des Adapters entlang der zweiten Längsachse zu verhindern.

Die Mittel zur Arretierung umfassen weiter wenigstens einen Arretierbolzen, wobei der Arretierbolzen bei in die Kupplung eingestecktem ersten Schaftende entlang der zweiten Längsachse im zweiten Bereich des ersten Schaftendes angeordnet ist und in einem arretiertem Zustand eine in Richtung der ersten und zweiten Längsachse verdrehfeste Verbindung zwischen der Kupplung und dem Adapter herstellen kann.

Dies hat den Vorteil, dass unbeabsichtigten Verunreinigungen auch bei sehr langen Rühr- und Mischvorgängen besser vermieden werden können, da es nur noch zu wesentlich reduziertem Abrieb zwischen Kupplung und Adapter kommt und aufgrund der Anordnung der Mittel zur Arretierung im Innen der Kupplung auch bei der Herstellung und Lösung der Verbindung keine Verunreinigungen unmittelbar heraus- bzw. herunterfallen können. Dies ist besonders auch deshalb von sehr großer Bedeutung, da Rührvorgänge sich über einen längeren Zeitraum erstrecken können, beispielsweise acht Stunden oder mehr. Weiter wird erreicht, dass der Adapter einfach in die Kupplung beidhändig unterstützt eingeklickt werden kann und mittels der Arretiervorrichtung vor einem unbeabsichtigtem Herausfallen geschützt wird und dann nicht länger festgehalten werden muss. Der Arretierbolzen kann dann in der Folge z.B. mittels eines Werkzeuges entsprechend in eine arretierende Stellung verbracht werden, was vorteilhafterweise dann ebenfalls beidhändig geschehen kann. Dies trägt auch dazu bei, dass Arbeitsvorgänge betreffend die Montage bzw. Demontage der Rührer ergonomischer gestaltet werden können und die Arbeitssicherheit erhöht wird. Ein weiterer Vorteil ist, dass die erfindungsgemäßen Gegenstände in verschiedensten Größen, wie z.B. verschiedene Durchmesser von Wellen, etwa im Bereich von 1 mm bis 100 mm, bevorzugt 6 mm bis 24 mm, besonders bevorzugt 22 mm, hergestellt und eingesetzt werden können, ohne dass das grundsätzliche Design weiterer Anpassungen bedarf. Durchmesser verwendeter Rührflügel können bevorzugt z.B. 60 mm bis 240 mm betragen.

Der Gegenstand der Erfindung umfasst also insbesondere eine Kupplung aufweisend eine erste Aufnahme für eine Welle eines Rührwerks zur kraftschlüssigen Verbindung der Kupplung mit der Welle und eine zweite Aufnahme für einen Adapter für ein Rührwerkzeug zur lösbaren, kraftschlüssigen Verbindung der Kupplung mit dem Adapter, wobei der Adapter mit einem Rührwerkzeug kraftschlüssig verbindbar oder verbunden ist, wobei die zweite Aufnahme eine kreiszylinderförmige Ausnehmung mit einer ersten Längsachse umfasst, in die ein erstes Schaftende des Adapters formschlüssig in Richtung der ersten Längsachse einsteckbar ist, wobei das erste Schaftende eine zweite Längsachse aufweist und wobei das erste Schaftende entlang der zweiten Längsachse einen ersten Abschnitt und einen zweiten Abschnitt umfasst, wobei der erste Abschnitt eine kreiszylindrische Form mit einen runden Querschnitt symmetrisch zur zweiten Längsachse aufweist und wobei der zweite Abschnitt einen polygonen Querschnitt aufweist, und wobei das erste Schaftende im ersten Abschnitt eine umlaufende Vertiefung aufweist, und wobei die Kupplung Mittel zur Arretierung des in die zweite Aufnahme eingesteckten ersten Schaftendes umfasst, wobei die Mittel zur Arretierung eine Arretiervorrichtung umfassen mit einer konvexen Struktur zum Eingreifen in die umlaufende Vertiefung im ersten Schaftende um ein unbeabsichtigtes Herausfallen aus der Kupplung des in die Kupplung eingesteckten ersten Schaftendes des Adapters entlang der zweiten Längsachse zu verhindern, die Mittel zur Arretierung weiter umfassend wenigstens einen Arretierbolzen, wobei der Arretierbolzen bei in die Kupplung eingestecktem ersten Schaftende entlang der zweiten Längsachse im zweiten Bereich des ersten Schaftendes angeordnet ist und in einem arretiertem Zustand eine in Richtung der ersten und zweiten Längsachse verdrehfeste Verbindung zwischen der Kupplung und dem Adapter herstellen kann.

Bevorzugt kann ein Einführen des ersten Schaftendes des Adapters in die zweite Aufnahme der Kupplung in jeder relativen Orientierung bezüglich Verdrehungen um die erste und/oder zweite Längsachse erfolgen. Dies hat den Vorteil, dass Kupplung und Adapter unabhängig von ihrer jeweiligen axialen Orientierung um die erste bzw. zweite Achse verbunden werden können. Insbesondere wird in jeder diesbezüglichen Winkelstellung zueinander bewirkt, dass der eingeklickte Adapter nicht mehr unbeabsichtigt herausfallen kann, auch wenn der Arretierbolzen noch in einer nicht-arretierten Stellung ist.

Bevorzugt sind die erste und die zweite Aufnahme jeweils konzentrisch zu einer gemeinsamen Drehachse angeordnet. Bevorzugt ist die erste Längsachse entlang der Drehachse angeordnet. Bevorzugt ist die zweite Längsachse bei in die Kupplung eingestecktem ersten Schaftende entlang der Drehachse angeordnet. Dies hat den Vorteil, dass eine Kraftübertragung vom Rührwerk auf den Rührflügel unter Vermeidung von Unwuchten und ohne seitlichen Versatz möglich ist.

Bevorzugt kann die Arretierung des Adapters mittels der Arretiervorrichtung bei Einführen des ersten Schaftendes des Adapters in die zweite Aufnahme der Kupplung in jeder relativen Orientierung bezüglich Verdrehungen um die erste und/oder zweite Längsachse erfolgen.

Bevorzugt umfasst die Arretiervorrichtung eine in einer ersten Ausnehmung in der Kupplung geführten Kugelfederbuchse, wobei die erste Ausnehmung bevorzugt senkrecht zur ersten Längsachse angeordnet ist. Dies hat den Vorteil, dass eine besonders einfache und zuverlässige und zugleich leicht lösbarer Herausfallschutz erreicht werden kann.

Bevorzugt ist der Arretierbolzen in einer zweiten Ausnehmung in der Kupplung geführten, wobei die zweite Ausnehmung bevorzugt senkrecht zur ersten Längsachse angeordnet ist.

Bevorzugt weist der Arretierbolzen eine erste Auflagefläche auf und wobei die Oberfläche des ersten Schaftendes im zweiten Bereich mit dem polygonen Querschnitt mindestens eine zweite Auflagefläche bildet, wobei die erste Auflagefläche des Arretierbolzens auf der zweiten Auflagefläche des ersten Schaftendes im arretiertem Zustand formschlüssig aufliegt. Dies hat den Vorteil, dass eine besonders verdrehfeste Verbindung zwischen der Kupplung und dem Adapter hergestellt werden kann.

Bevorzugt handelt es sich bei dem polygonen Querschnitt um einen hexagonalen, besonders bevorzugt um einen quadratischen Querschnitt, was zu einer entsprechenden Anzahl von sechs bzw. vier zweiten Auflageflächen korrespondiert.

Bevorzugt sind die erste und die zweite Auflagefläche ebene Flächen. Dies hat den Vorteil, dass der Arretierbolzen den Adapter in eine definierte Winkelposition um die zweite Längsachse dreht und in dieser Position entsprechend fixiert.

In bevorzugten Ausführungen sind zwei, drei, vier, fünf, sechs oder mehr Arretierbolzen vorgesehen, die jeweils in einer Ausnehmung geführt sind. Bevorzugt sind maximal so viele, besonders bevorzugt genauso viele Arretierbolzen vorgesehen, wie Flächen im ersten Abschnitt mit dem polygonen Querschnitt des ersten Schaftendes des Adapters vorgesehen sind. Sind zwei Arretierbolzen vorgesehen, so sind diese in bevorzugter Ausgestaltung gegenüber in einem Winkelabstand von 180 Grad entlang des Umfangs angeordnet.

Bevorzugt ist der Arretierbolzen oder sind sie Arretierbolzen jeweils als Madenschraube ausgestaltet, die in einem Innengewinde im Aufnahmeteil verdrehbar angeordnet ist. Dies hat den Vorteil, dass eine besonders einfache und zuverlässige Arretierung möglich ist.

Bevorzugt sind die erste und/oder die zweite Ausnehmung als Bohrungen ausgestaltet.

Bevorzugt weist die ersten Ausnehmung und/oder die zweite Ausnehmung ein Innengewinde auf und wobei die Kugelfederbuche in die erste Ausnehmung und/oder der Arretierbolzen in die zweite Ausnehmung einschraubbar sind.

Bevorzugt ist der Adapter dauerhaft mit dem Rührwerkzeug verbunden, z.B. mittels einer Verklebung und/oder Verschweißung.

In einer bevorzugten Ausgestaltung umfasst der Adapter das Rührwerkzeug.

Bevorzugt weist die erste Aufnahme ein Innengewinde auf, in das eine ein Außengewinde aufweisende Welle eines Rührwerks einschraubbar ist.

In einer bevorzugten Ausgestaltung ist das erste Schaftende an der der dritten Aufnahme abgewandten Seite angeschrägt, bevorzugt in einem Winkel von 25 Grad, um scharfe Kanten zu vermeiden und den Adapter leichter zentriert in die Kupplung einführen zu können.

Bevorzugt weist die Kupplung eine dritte Auflagefläche auf, die die Öffnung der zweiten Aufnahme wenigstens teilweise, bevorzugt vollständig umschließt. Die dritte Auflagefläche ist bevorzugt als ebene Fläche ausgestaltet. Bevorzugt ist die dritte Auflagefläche senkrecht zur ersten Längsachse angeordnet und/oder symmetrisch zur ersten Längsachse.

Bevorzugt weist die dritte Auflagefläche dabei die Form eines Rings, bevorzugt eines Kreisrings auf.

Die dritte Auflagefläche liegt bei in die Kupplung eingesetztem Adapter auf einer vierten Auflagefläche des Adapters wenigstens teilweise, bevorzugt vollständig, auf. Der Adapter weist also bevorzugt eine vierte Auflagefläche auf, wobei die vierte Auflagefläche bevorzugt zum ersten Schaftende hin orientiert ist. Die vierte Auflagefläche umschließt radial wenigstens teilweise, bevorzugt vollständig, den ersten Abschnitt des ersten Schaftendes. Die vierte Auflagefläche ist bevorzugt als ebene Fläche ausgestaltet. Bevorzugt ist die vierte Auflagefläche senkrecht zur ersten Längsachse angeordnet und/oder symmetrisch zur ersten Längsachse. Bevorzugt weist die vierte Auflagefläche dabei die Form eines Rings, bevorzugt eines Kreisrings auf.

Bevorzugt weist die dritte und/oder vierte Auflagefläche eine oder mehrere ringförmige, bevorzugt kreisringförmige, umlaufende Ausnehmung auf, in die eine oder mehrere Dichtungen, z.B. in Form eines oder mehrerer Dichtringe, eingreifen können. Die Ausnehmung oder die Ausnehmungen sind dabei bevorzugt symmetrisch zur ersten Längsachse angeordnet. Mehrere Ausnehmungen sind dabei bevorzugt konzentrisch zueinander angeordnet.

Dies hat den Vorteil, dass die Kupplung und der Adapter so miteinander verbunden werden können, dass aufgrund der Abdichtung mittels der Dichtung, wobei die Abdichtung bevorzugt hermetisch ausgestaltet ist, keine Partikel, wie z.B. Schmutz oder Abrieb aus dem Bereich der kraftschlüssigen Verbindung der Kupplung und dem ersten Schaftende des Adapters austreten können und z.B. die zu rührenden Substanzen verunreinigen. Weiter hat dies den Vorteil, dass die erfindungsgemäße Kupplung und der Adapter auch z.B. unter Reinraumbedingungen betrieben werden kann. Diese Vorteile kommen z.B. besonders auch bei der Herstellung von Diagnostika, Medikamenten und in der Lebensmittelindustrie zum Tragen. Weiter bewirkt die Dichtung, dass z.B. aggressive Dämpfe entsprechend abgehalten werden und die innenliegenden Teile der Kupplung sowie die durch die Kupplung umschlossenen Teile des Adapters entsprechend vor Korrosionsprozessen besser geschützt sind. Dies verlängert u.a. auch die mittlere Lebensdauer der Vorrichtungen.

Ein weiterer Gegenstand der Erfindung ist ein Adapter für ein Rührwerkzeug zur lösbaren, kraftschlüssigen Verbindung einer erfindungsgemäßen Kupplung mit dem Adapter, wobei der Adapter mit einem Rührwerkzeug kraftschlüssig verbindbar oder verbunden ist, der Adapter aufweisend ein erstes Schaftende, das in die zweite Aufnahme formschlüssig in Richtung der ersten Längsachse einsteckbar ist, wobei das erste Schaftende eine zweite Längsachse aufweist und wobei das erste Schaftende entlang der zweiten Längsachse einen ersten Abschnitt und einen zweiten Abschnitt umfasst, wobei der erste Abschnitt eine kreiszylindrische Form mit einen runden Querschnitt symmetrisch zur zweiten Längsachse aufweist und wobei der zweite Abschnitt einen polygonen Querschnitt aufweist, und wobei das erste Schaftende im ersten Abschnitt eine umlaufende Vertiefung aufweist, wobei die Vertiefung bevorzugt konkav, z.B. in Form einer Nut, ausgestaltete ist, und wobei die Kupplung Mittel zur Arretierung des in die zweite Aufnahme eingesteckten ersten Schaftendes umfasst, wobei die Mittel zur Arretierung eine Arretiervorrichtung umfassen mit einer konvexen Struktur zum Eingreifen in die umlaufende Vertiefung im ersten Schaftende um ein unbeabsichtigtes Herausfallen aus der Kupplung des in die Kupplung eingesteckten ersten Schaftendes des Adapters entlang der zweiten Längsachse zu verhindern, die Mittel zur Arretierung weiter umfassend wenigstens einen Arretierbolzen, wobei der Arretierbolzen bei in die Kupplung eingestecktem ersten Schaftende entlang der zweiten Längsachse im zweiten Bereich des ersten Schaftendes angeordnet ist und in einem arretiertem Zustand eine in Richtung der ersten und zweiten Längsachse verdrehfeste Verbindung zwischen der Kupplung und dem Adapter herstellen kann.

Bevorzugt weist der Arretierbolzen eine erste Auflagefläche auf und wobei die Oberfläche des ersten Schaftendes im zweiten Bereich mit dem polygonen Querschnitt mindestens eine zweite Auflagefläche bildet, wobei die erste Auflagefläche des Arretierbolzens auf der zweiten Auflagefläche des ersten Schaftendes im arretiertem Zustand formschlüssig aufliegt und eine kraftschlüssige, verdrehfeste Verbindung zwischen Kupplung und Adapter bewirkt wird.

Bevorzugt ist der größte Abstand der zweiten Auflagefläche von der zweiten Längsachse kleiner als der Radius des ersten Schaftendes im ersten Abschnitt, so dass die zweite Auflagefläche radial in Richtung der zweiten Längsachse versetzt ist und der Arretierbolzen auch bei unvollständiger Arretierung ein Herausfallen des eingesteckten Adapters verhindern kann.

In einer bevorzugten Ausgestaltung weisen der Adapter und die Kupplung entlang ihres Umfangs mindestens je eine Markierung auf, die besonders bevorzugt eingefräst, aufgezeichnet oder aufgeklebt ist, wobei die Markierungen so angeordnet sind, dass wenn sie räumlich zueinander ausgerichtet werden, die relative radiale Orientierung so eingestellt ist, dass die erste und zweite Auflageflächen parallel zueinander angeordnet sind. Dies hat den Vorteil, dass die Kupplung und der Adapter besonders einfach, schnell und sicher in eine relative radiale Orientierung gebracht werden können, in denen die Arretierung mittels des Arretierbolzens besonders einfach und effektiv erfolgen kann.

Ein weiterer Gegenstand der Erfindung ist ein System umfassend eine erfindungsgemäße Kupplung und einen erfindungsgemäßen Adapter zur lösbaren, kraftschlüssigen Verbindung der Kupplung mit dem Adapter.

Ein weiterer Gegenstand der Erfindung ist ein Verfahren zur Herstellung von Reagenzien für die in vitro-Diagnostik, das Verfahren umfassend die folgenden Schritte
- Bereitstellen eines Gefäßes,
- Einfüllen von Flüssigkeit und/oder anderen Inhaltsstoffen eines Reagenz in das Gefäß,
- Verrühren und/oder vermischen des Inhalts des Gefäßes mittels eines Rührwerkzeuges, das mittels eines erfindungsgemäßen Systems mit einem Rührwerk verbunden ist,
- Weiterverarbeitung des verrührten und/oder vermischten Inhalts des Gefäßes zu einem oder mehreren Reagenzien für die in vitro-Diagnostik.

Ein weiterer Gegenstand der Erfindung ist die Verwendung eines erfindungsgemäßen Systems und/oder eines erfindungsgemäßen Verfahrens zur Herstellung von einem oder mehreren Reagenzien für die in vitro-Diagnostik.

Unter einer "Probe" ist im Sinne der Erfindung das Material zu verstehen, dass die nachzuweisende Substanz (den Analyten) vermutlich enthält. Der Begriff "Probe" umfasst insbesondere biologische Flüssigkeiten von Menschen oder Tieren wie z.B. Blut, Plasma, Serum, Sputum, Exsudat, bronchoalveoläre Lavage, Lymphflüssigkeit, Synovialflüssigkeit, Samenflüssigkeit, Vaginalschleim, Feces, Urin, Liquor, aber auch z.B. durch Homogenisation oder Zelllyse für die photometrische, bevorzugt nephelometrische Bestimmung entsprechend aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind.

Bei einem quantitativen Nachweis wird die Menge, die Konzentration oder die Aktivität des Analyten in der Probe gemessen. Von dem Begriff des "quantitativen Nachweises" sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

### Die Erfindung wird anhand von Zeichnungen exemplarisch näher erläutert. Darin zeigen:

FIG. 1 eine schematische Darstellung eines Schnitts durch eine Kupplung (1),
FIG. 2 eine schematische Darstellung einer Aufsicht auf die Kupplung (1) aus FIG 2,
FIG. 3 eine schematische Darstellung einer Aufsicht auf einen Adapter (2),
FIG. 4 eine schematische Darstellung einer Aufsicht auf den Adapter (2) aus FIG 3,
FIG. 5 eine schematische Darstellung einer Aufsicht auf ein System umfassend eine Kupplung (1) wie in FIG. 1 und 2 dargestellt und einen Adapter (2) wie in FIG. 3 und 4 dargestellt,
FIG. 6 eine schematische Darstellung eines Schnitts bzw. einer Aufsicht des in FIG. 5 dargestellte Systems, das System umfassend eine Kupplung (1) wie in FIG. 1 und 2 dargestellt und einen Adapter (2) wie in FIG. 3 und 4 dargestellt.

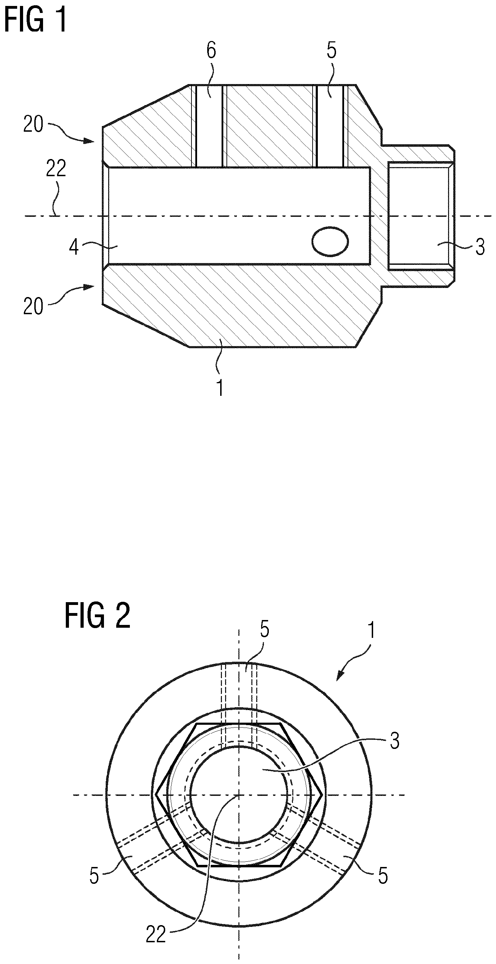

FIG. 1 zeigt eine schematische Darstellung eines Schnitts durch eine erfindungsgemäße Kupplung (1). Die Kupplung (1) weist eine erste Aufnahme (3) für eine Welle eines Rührwerks auf zur kraftschlüssigen Verbindung der Kupplung (1) mit der Welle. Weiter weist die Kupplung (1) eine zweite Aufnahme (4) für einen Adapter (2) für ein Rührwerkzeug auf zur lösbaren, kraftschlüssigen Verbindung der Kupplung (1) mit dem Adapter (2), wobei der Adapter (2) mit einem Rührwerkzeug kraftschlüssig verbindbar ist, oder z.B. vorteilhaft dauerhaft verbunden ist. Die zweite Aufnahme (4) umfasst eine kreiszylinderförmige Ausnehmung mit einer ersten Längsachse (22), in die ein erstes Schaftende (7) des Adapters (2) formschlüssig in Richtung der ersten Längsachse (22) einsteckbar ist. Das erste Schaftende (7) weist eine zweite Längsachse (23) auf und das erste Schaftende (7) umfasst entlang der zweiten Längsachse (23) einen ersten Abschnitt (8) und einen zweiten Abschnitt (9). Der erste Abschnitt (8) weist eine kreiszylindrische Form mit einem runden Querschnitt symmetrisch zur zweiten Längsachse (23) auf und der zweite Abschnitt (9) einen polygonen Querschnitt. Das erste Schaftende (7) weist im ersten Abschnitt (8) eine umlaufende, konkave Vertiefung in der Form einer Nut auf. Die Kupplung (1) weist Mittel zur Arretierung des in die zweite Aufnahme (4) eingesteckten ersten Schaftendes (7) auf, wobei die Mittel zur Arretierung eine Arretiervorrichtung (14) umfassen mit einer konvexen Struktur (18) zum Eingreifen in die umlaufende Vertiefung (10) im ersten Schaftende (7) um ein unbeabsichtigtes Herausfallen aus der Kupplung (1) des in die Kupplung (1) eingesteckten ersten Schaftendes (7) des Adapters (2) entlang der zweiten Längsachse (23) zu verhindern. Die Mittel zur Arretierung umfassen weiter einen Arretierbolzen (15), wobei der Arretierbolzen (15) bei in die Kupplung (1) eingestecktem ersten Schaftende (7) entlang der zweiten Längsachse (23) im zweiten Bereich (9) des ersten Schaftendes (7) angeordnet ist und in einem arretiertem Zustand eine in Richtung der ersten (22) und zweiten (23) Längsachse verdrehfeste Verbindung zwischen der Kupplung (1) und dem Adapter (2) herstellen kann.

Ein Einführen des ersten Schaftendes (7) des Adapters (2) kann in die zweite Aufnahme (4) der Kupplung (1) in jeder relativen Orientierung bezüglich Verdrehungen um die erste und/oder zweite Längsachse (22, 23) erfolgen. Die erste und die zweite Aufnahme (3, 4) sind jeweils konzentrisch zu einer gemeinsamen Drehachse angeordnet ausgestaltet.

Die erste Längsachse (22) ist entlang der Drehachse angeordnet und die zweite Längsachse (23) ist bei in die Kupplung (1) eingestecktem ersten Schaftende (7) entlang der Drehachse angeordnet.

Die Arretierung des Adapters (2) kann mittels der Arretiervorrichtung (14) bei Einführen des ersten Schaftendes (7) des Adapters (2) in die zweite Aufnahme (4) der Kupplung (1) in jeder relativen Orientierung bezüglich Verdrehungen um die erste und/oder zweite Längsachse (22, 23) erfolgen.

Die Arretiervorrichtung (14) umfasst eine in einer ersten Ausnehmung (5) in der Kupplung (1) geführten Kugelfederbuchse, wobei die erste Ausnehmung (5) senkrecht zur ersten Längsachse (22) angeordnet ist.

Der Arretierbolzen (15) ist in einer zweiten Ausnehmung (6) in der Kupplung (1) geführten und die zweite Ausnehmung (6) ist senkrecht zur ersten Längsachse (22) angeordnet.

Der Arretierbolzen (15) weist eine erste Auflagefläche (17) auf und die Oberfläche des ersten Schaftendes (7) bildet im zweiten Bereich (9) mit dem polygonen Querschnitt vier zweite Auflageflächen (11), wobei die erste Auflagefläche (17) des Arretierbolzens (15) auf einer der zweiten Auflageflächen (11) des ersten Schaftendes (7) im arretiertem Zustand formschlüssig aufliegt.

Die erste Auflagefläche (17) und die zweiten Auflageflächen (11) sind als ebene Flächen ausgebildet.

Die ersten Ausnehmung (5) und die zweite Ausnehmung (6) weisen ein Innengewinde auf und die Kugelfederbuche ist in die erste Ausnehmung (5) und der Arretierbolzen (15) in die zweite Ausnehmung (6) einschraubbar.

FIG. 2 zeigt eine schematische Darstellung einer Aufsicht auf die Kupplung (1) aus FIG. 1 entlang der ersten Längsachse (22) auf die erste Aufnahme (3). Die erste Aufnahme (3) umfasst die Form einer hexagonalen Schraubenmutter. Gestrichelt dargestellt sind weiter drei erste Ausnehmungen (5), die in einem Winkelabstand von 120 Grad entlang des Umfangs angeordnet sind.

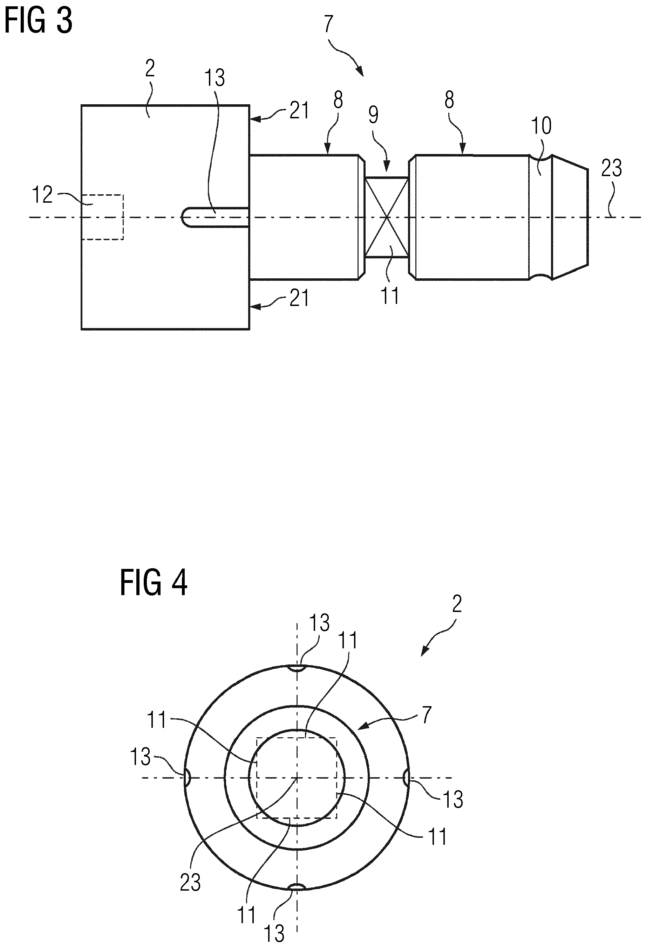

FIG. 3 zeigt eine schematische Darstellung Aufsicht auf einen Adapter (2). Der Adapter (2) umfasst eine dritte Aufnahme (12), die mit einem Rührwerkzeug kraftschlüssig verbindbar ist. An der Außenfläche des Adapters (2) ist eine Markierung (13) eingefräst. Auf der der dritten Aufnahme (12) abgewandten Seite ist eine ebene, vierte Auflagefläche (21) ausgebildet, die als Kreisring ausgestaltet ist und ein erstes Schaftende (7) umschließt. Das erste Schaftende (7) umfasst einen ersten Abschnitt (8), der im Wesentlichen kreiszylinderförmig und symmetrisch zu einer zweiten Längsachse (23) ausgestaltet ist. Weiter umfasst das erste Schaftende (7) einen zweiten Abschnitt (9), der einen quadratischen Querschnitt senkrecht zur zweiten Längsachse (23) aufweist und vier erste Auflageflächen (11) umfasst. Der quadratische Querschnitt ist dabei symmetrisch zur zweiten Längsachse (23) ausgestaltet. Weiter umfasst das erste Schaftende (7) eine umlaufende, konkave Vertiefung (10), in die eine konvexe Struktur (18) einer Arretiervorrichtung (14) eingreifen kann. Zum Ende hin ist das erste Schaftende (7) um 25 Grad gegen die zweite Achse (23) abgeschrägt auslaufend ausgestaltet. Die Markierung (13) ist auf der Mantelfläche so angeordnet, dass es die Lage einer der vier zweiten Auflageflächen (11) markiert.

FIG. 4 zeigt eine schematische Darstellung einer Aufsicht auf den Adapter (2) aus FIG 3 entlang der zweiten Drehachse (23), Blickrichtung auf die der dritten Aufnahme (12) abgewandten Seite. Dargestellt sind gestrichelt die vier zweiten Auflageflächen (11) des ersten Schaftendes (7) sowie die jeweils die Lage einer der zweiten Auflageflächen (11) kennzeichnenden Markierungen (13), die entlang des Umfangs entsprechend angeordnet sind.

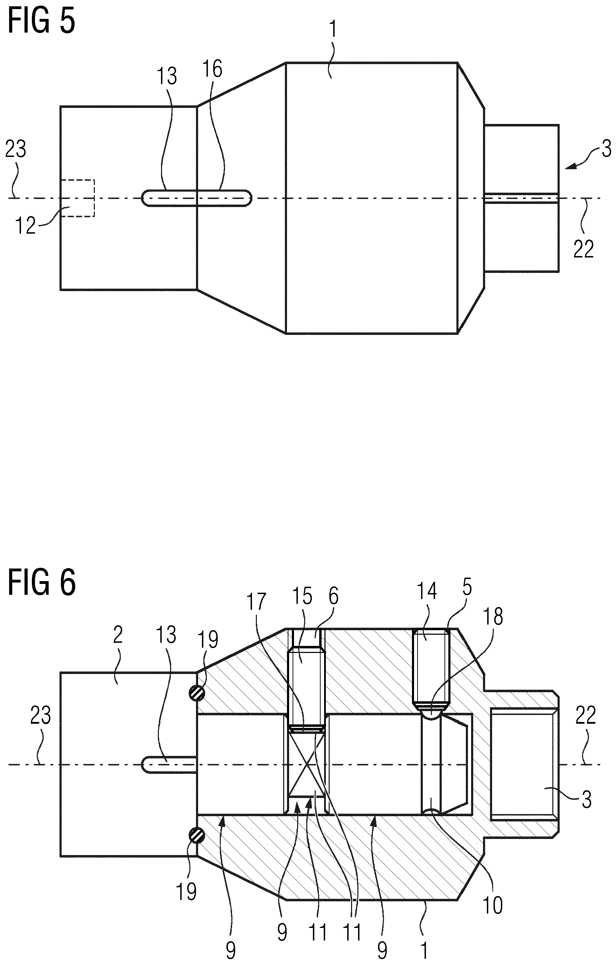

FIG. 5 zeigt eine schematische Darstellung einer Aufsicht auf ein System umfassend eine Kupplung (1) wie in FIG. 1 und 2 dargestellt und einen Adapter (2) wie in FIG. 3 und 4 dargestellt entlang der ersten Längsachse (22) und der zweiten Längsachse (23), wobei die beiden Längsachsen zusammenfallen und eine gemeinsame Längsachse bilden. Dargestellt ist die dritte Aufnahme (12) und eine der Markierungen (13), die mit einer der Markierungen (16) korrespondierend in Übereinstimmung gebracht wurden durch relatives Verdrehen der Kupplung (1) und des Adapters (2) zueinander. Weiter dargestellt sind die erste Aufnahme (3).

FIG. 6 zeigt eine schematische Darstellung eines Schnitts bzw. einer Aufsicht des in FIG. 5 dargestellte Systems, das System umfassend eine Kupplung (1) wie in FIG. 1 und 2 dargestellt und einen Adapter (2) wie in FIG. 3 und 4 dargestellt. Dargestellt ist insbesondere eine erste Ausnehmung (5) und eine zweite Ausnehmung (6) in der Kupplung (1). In der ersten Ausnehmung (5) ist eine Arretiervorrichtung (14) angeordnet, die als Kugelfederbuchse ausgestaltet ist und einen Kugelfederkopf umfasst, der eine konvexe Struktur (18) umfasst. Die konvexe Struktur (18) kann in die umlaufende, konkave Vertiefung (10) des ersten Schaftendes (7) des Adapters (2) eingreifen. Dies bewirkt, dass ein unbeabsichtigtes Herausgleiten des Adapters (2) aus der Kupplung (1) heraus verhindert wird, und zwar insbesondere auch bei senkrechter Ausrichtung der Längsachse im Schwerefeld der Erde, so dass der Adapter nach Unten Richtung Erdmittelpunkt orientiert angeordnet ist. In der zweiten Ausnehmung (6) ist ein Arretierbolzen (15) angeordnet, der eine erste Auflagefläche (17) umfasst, deren Normale in Richtung der ersten Längsachse 22 orientiert ist. Der Arretierbolzen (15) ist mittels einer Madenschraube in eine Position gebracht, dass die erste Auflagefläche (17) auf einer der zweiten Auflageflächen (11) aufliegt. Dies bewirkt, dass eine kraftschlüssige, verdrehfeste Verbindung zwischen Kupplung (1) und Adapter (2) hergestellt ist. Weiter ist eine Dichtung (19), die als Dichtring ausgestaltet ist dargestellt. Die Dichtung (19) ist dabei in Kontakt mit der dritten Auflagefläche (20) und der vierten Auflagefläche (21) und stellt eine hermetisch dichte, umlaufende Dichtung her.

### Bezugszeichenliste

- 1: Kupplung
- 2: Adapter
- 3: erste Aufnahme
- 4: zweite Aufnahme
- 5: erste Ausnehmung
- 6: zweite Ausnehmung
- 7: erstes Schaftende
- 8: erster Abschnitt
- 9: zweiter Abschnitt
- 10: umlaufende Vertiefung
- 11: zweite Auflagefläche
- 12: dritte Aufnahme
- 13: Markierung
- 14: Arretiervorrichtung
- 15: Arretierbolzen
- 16: Markierung
- 17: erste Auflagefläche
- 18: konvexe Struktur
- 19: Dichtung
- 20: dritte Auflagefläche
- 21: vierte Auflagefläche
- 22: erste Längsachse
- 23: zweite Längsachse

## Patentansprüche

1. Kupplung (1) aufweisend eine erste Aufnahme (3) für eine Welle eines Rührwerks zur kraftschlüssigen Verbindung der Kupplung (1) mit der Welle und eine zweite Aufnahme (4) für einen Adapter (2) für ein Rührwerkzeug zur lösbaren, kraftschlüssigen Verbindung der Kupplung (1) mit dem Adapter (2), wobei der Adapter (2) mit einem Rührwerkzeug kraftschlüssig verbindbar ist,
wobei die zweite Aufnahme (4) eine kreiszylinderförmige Ausnehmung mit einer ersten Längsachse (22) umfasst, in die ein erstes Schaftende (7) des Adapters (2) formschlüssig in Richtung der ersten Längsachse (22) einsteckbar ist,
wobei das erste Schaftende (7) eine zweite Längsachse (23) aufweist und wobei das erste Schaftende (7) entlang der zweiten Längsachse (23) einen ersten Abschnitt (8) und einen zweiten Abschnitt (9) umfasst,
**dadurch gekennzeichnet, dass** der erste Abschnitt (8) eine kreiszylindrische Form mit einem runden Querschnitt symmetrisch zur zweiten Längsachse (23) aufweist und wobei der zweite Abschnitt (9) einen polygonen Querschnitt aufweist, und wobei das erste Schaftende (7) im ersten Abschnitt (8) eine umlaufende Vertiefung (10)aufweist,
und wobei die Kupplung (1) Mittel zur Arretierung des in die zweite Aufnahme (4) eingesteckten ersten Schaftendes (7) umfasst,
wobei die Mittel zur Arretierung eine Arretiervorrichtung (14) umfassen mit einer konvexen Struktur (18) zum Eingreifen in die umlaufende Vertiefung (10) im ersten Schaftende (7) um ein unbeabsichtigtes Herausfallen aus der Kupplung (1) des in die Kupplung (1) eingesteckten ersten Schaftendes (7) des Adapters (2) entlang der zweiten Längsachse (23) zu verhindern,
die Mittel zur Arretierung weiter umfassend wenigstens einen Arretierbolzen (15), wobei der Arretierbolzen (15) bei in die Kupplung (1) eingestecktem ersten Schaftende (7) entlang der zweiten Längsachse (23) im zweiten Bereich (9) des ersten Schaftendes (7) angeordnet ist und in einem arretiertem Zustand eine in Richtung der ersten (22) und zweiten (23) Längsachse verdrehfeste Verbindung zwischen der Kupplung (1) und dem Adapter (2) herstellen kann.

2. Kupplung (1) nach Anspruch 1, wobei ein Einführen des ersten Schaftendes (7) des Adapters (2) in die zweite Aufnahme (4) der Kupplung (1) in jeder relativen Orientierung bezüglich Verdrehungen um die erste und/oder zweite Längsachse (22, 23) erfolgen kann.

3. Kupplung (1) nach einem der vorhergehenden Ansprüche, wobei die erste und die zweite Aufnahme (3, 4) jeweils konzentrisch zu einer gemeinsamen Drehachse angeordnet sind.

4. Kupplung (1) nach einem der vorhergehenden Ansprüche, wobei die erste Längsachse (22) entlang der Drehachse angeordnet ist und/oder wobei die zweite Längsachse (23) bei in die Kupplung (1) eingestecktem ersten Schaftende (7) entlang der Drehachse angeordnet ist.

5. Kupplung (1) nach einem der vorhergehenden Ansprüche, wobei die Arretierung des Adapters (2) mittels der Arretiervorrichtung bei Einführen des ersten Schaftendes (7) des Adapters (2) in die zweite Aufnahme (4) der Kupplung (1) in jeder relativen Orientierung bezüglich Verdrehungen um die erste und/oder zweite Längsachse (22, 23) erfolgen kann.

6. Kupplung (1) nach einem der vorhergehenden Ansprüche, wobei die Arretiervorrichtung (14) eine in einer ersten Ausnehmung (5) in der Kupplung (1) geführten Kugelfederbuchse umfasst, wobei die erste Ausnehmung (5) bevorzugt senkrecht zur ersten Längsachse (22) angeordnet ist.

7. Kupplung (1) nach einem der vorhergehenden Ansprüche, wobei der Arretierbolzen (15) in einer zweiten Ausnehmung (6) in der Kupplung (1) geführten ist, wobei die zweite Ausnehmung (6) bevorzugt senkrecht zur ersten Längsachse (22) angeordnet ist.

8. Kupplung (1) nach einem der vorhergehenden Ansprüche, wobei der Arretierbolzen (15) eine erste Auflagefläche (17) aufweist und wobei die Oberfläche des ersten Schaftendes (7) im zweiten Bereich (9) mit dem polygonen Querschnitt mindestens eine zweite Auflagefläche (11) bildet, wobei die erste Auflagefläche (17) des Arretierbolzens (15) auf der zweiten Auflagefläche (11) des ersten Schaftendes (7) im arretiertem Zustand formschlüssig aufliegt.

9. Kupplung (1) nach Anspruch 8, wobei die erste und die zweite Auflagefläche (17, 11) ebene Flächen sind.

10. Kupplung (1) nach einem der Ansprüche 6 bis 9, wobei die ersten Ausnehmung (5) und/oder die zweite Ausnehmung (6) ein Innengewinde aufweisen und wobei die Kugelfederbuche in die erste Ausnehmung (5) und/oder der Arretierbolzen (15) in die zweite Ausnehmung (6) einschraubbar sind.

11. Adapter (2) für ein Rührwerkzeug zur lösbaren, kraftschlüssigen Verbindung einer Kupplung (1) nach einem der Ansprüche 1 bis 10 mit dem Adapter (2), wobei der Adapter (2) mit einem Rührwerkzeug kraftschlüssig verbindbar oder verbunden ist, der Adapter (2) aufweisend ein erstes Schaftende (7), das in die zweite Aufnahme (4) formschlüssig in Richtung der ersten Längsachse (22) einsteckbar ist, wobei das erste Schaftende (7) eine zweite Längsachse (23) aufweist und wobei das erste Schaftende (7) entlang der zweiten Längsachse (23) einen ersten Abschnitt (8) und einen zweiten Abschnitt (9) umfasst, wobei der erste Abschnitt (8) eine kreiszylindrische Form mit einen runden Querschnitt symmetrisch zur zweiten Längsachse (23) aufweist und wobei der zweite Abschnitt (9) einen polygonen Querschnitt aufweist, und wobei das erste Schaftende (7) im ersten Abschnitt (8) eine umlaufende Vertiefung (10) aufweist,
und wobei die Kupplung (1) Mittel zur Arretierung des in die zweite Aufnahme (4) eingesteckten ersten Schaftendes (7) umfasst,
wobei die Mittel zur Arretierung eine Arretiervorrichtung (14) umfassen mit einer konvexen Struktur (18) zum Eingreifen in die umlaufende Vertiefung (10) im ersten Schaftende (7) um ein unbeabsichtigtes Herausfallen aus der Kupplung (1) des in die Kupplung (1) eingesteckten ersten Schaftendes (7) des Adapters (2) entlang der zweiten Längsachse (23) zu verhindern,
die Mittel zur Arretierung weiter umfassend wenigstens einen Arretierbolzen (15), wobei der Arretierbolzen (15) bei in die Kupplung (1) eingestecktem ersten Schaftende (7) entlang der zweiten Längsachse (23) im zweiten Bereich (9) des ersten Schaftendes (7) angeordnet ist und in einem arretiertem Zustand eine in Richtung der ersten und zweiten Längsachse (23) verdrehfeste Verbindung zwischen der Kupplung (1) und dem Adapter (2) herstellen kann.

12. Adapter (2) nach Anspruch 11, wobei der Arretierbolzen (15) eine erste Auflagefläche (17) aufweist und wobei die Oberfläche des ersten Schaftendes (7) im zweiten Bereich (9) mit dem polygonen Querschnitt mindestens eine zweite Auflagefläche (11) bildet, wobei die erste Auflagefläche (17) des Arretierbolzens (15) auf der zweiten Auflagefläche (11) des ersten Schaftendes (7) im arretiertem Zustand formschlüssig aufliegt.

13. Adapter (2) nach Anspruch 12, wobei der größte Abstand der zweiten Auflagefläche (11) von der zweiten Längsachse kleiner ist als der Radius des ersten Schaftendes (17) im ersten Abschnitt (8), so dass die zweite Auflagefläche (11) radial in Richtung der zweiten Längsachse (23) versetzt ist und der Arretierbolzen (15) auch bei unvollständiger Arretierung ein Herausfallen des eingesteckten Adapters (2) verhindern kann.

14. System umfassend eine Kupplung (1) nach einem der Ansprüche 1 bis 10 und einen Adapter (2) nach einem der Ansprüche 11 bis 13 zur lösbaren, kraftschlüssigen Verbindung der Kupplung (1) mit dem Adapter (2).

15. Verfahren zur Herstellung von Reagenzien für die in vitro-Diagnostik, das Verfahren umfassend die folgenden Schritte
- Bereitstellen eines Gefäßes,
- Einfüllen von Flüssigkeit und/oder anderen Inhaltsstoffen eines Reagenz in das Gefäß,
- Verrühren und/oder vermischen des Inhalts des Gefäßes mittels eines Rührwerkzeuges, das mittels eines Systems nach Anspruch 14 mit einem Rührwerk verbunden ist,
- Weiterverarbeitung des verrührten und/oder vermischten Inhalts des Gefäßes zu einem oder mehreren Reagenzien für die in vitro-Diagnostik.

16. Verwendung eines Systems nach Anspruch 14 und/oder eines Verfahrens nach Anspruch 15 zur Herstellung von einem oder mehreren Reagenzien für die in vitro-Diagnostik.

## Claims

1. Coupling (1) having a first receptacle (3) for a shaft of a stirring apparatus, for the force-fit connection of the coupling (1) to the shaft, and a second receptacle (4) for an adapter (2) for a stirring tool, for the releasable, force-fit connection of the coupling (1) to the adapter (2), wherein the adapter (2) is connectable in a force-fitting manner to a stirring tool, wherein the second receptacle (4) comprises a circular-cylindrical recess with a first longitudinal axis (22), into which recess a first shaft end (7) of the adapter (2) is insertable in a form-fitting manner in the direction of the first longitudinal axis (22), wherein the first shaft end (7) has a second longitudinal axis (23), and wherein the first shaft end (7) comprises a first portion (8) and a second portion (9) along the second longitudinal axis (23), **characterized in that** the first portion (8) has a circular-cylindrical shape with a round cross section symmetrical to the second longitudinal axis (23), and wherein the second portion (9) has a polygonal cross section, and wherein the first shaft end (7) has a circumferential depression (10) in the first portion (8), and wherein the coupling (1) comprises means for locking the first shaft end (7) inserted into the second receptacle (4),
wherein the locking means comprise a locking device (14) with a convex structure (18) for engagement in the circumferential depression (10) in the first shaft end (7), in order to prevent the first shaft end (7) of the adapter (2) inserted into the coupling (1) from accidentally falling out of the coupling (1) along the second longitudinal axis (23),
the locking means further comprising at least one locking bolt (15), wherein the locking bolt (15), with the first shaft end (7) inserted into the coupling (1) along the second longitudinal axis (23), is arranged in the second region (9) of the first shaft end (7) and, in a locked state, can produce a non-rotational connection, in the direction of the first (22) and second (23) longitudinal axis, between the coupling (1) and the adapter (2).

2. Coupling (1) according to Claim 1, wherein insertion of the first shaft end (7) of the adapter (2) into the second receptacle (4) of the coupling (1) can take place in any relative orientation with respect to rotations about the first and/or second longitudinal axis (22, 23).

3. Coupling (1) according to one of the preceding claims, wherein the first and the second receptacle (3, 4) are each arranged concentrically with respect to a common axis of rotation.

4. Coupling (1) according to one of the preceding claims, wherein the first longitudinal axis (22) is arranged along the axis of rotation, and/or wherein the second longitudinal axis (23) is arranged along the axis of rotation when the first shaft end (7) is inserted into the coupling (1).

5. Coupling (1) according to one of the preceding claims, wherein the locking of the adapter (2) by means of the locking device, upon insertion of the first shaft end (7) of the adapter (2) into the second receptacle (4) of the coupling (1), can take place in any relative orientation with respect to rotations about the first and/or second longitudinal axis (22, 23) .

6. Coupling (1) according to one of the preceding claims, wherein the locking device (14) comprises a ball spring bushing guided in a first recess (5) in the coupling (1), wherein the first recess (5) is preferably arranged perpendicular to the first longitudinal axis (22).

7. Coupling (1) according to one of the preceding claims, wherein the locking bolt (15) is guided in a second recess (6) in the coupling (1), wherein the second recess (6) is preferably arranged perpendicular to the first longitudinal axis (22).

8. Coupling (1) according to one of the preceding claims, wherein the locking bolt (15) has a first bearing surface (17) and wherein the surface of the first shaft end (7) in the second region (9) with the polygonal cross section forms at least one second bearing surface (11), wherein the first bearing surface (17) of the locking bolt (15) rests on the second bearing surface (11) of the first shaft end (7) in a form-fitting manner in the locked state.

9. Coupling (1) according to Claim 8, wherein the first and second bearing surfaces (17, 11) are flat surfaces.

10. Coupling (1) according to one of Claims 6 to 9, wherein the first recess (5) and/or the second recess (6) have an internal thread, and wherein the ball spring bushing can be screwed into the first recess (5) and/or the locking bolt (15) can be screwed into the second recess (6).

11. Adapter (2) for a stirring tool for the releasable, force-fit connection of a coupling (1) according to one of Claims 1 to 10 to the adapter (2), wherein the adapter (2) is connectable or connected in a force-fitting manner to a stirring tool, the adapter (2) having a first shaft end (7) which is insertable into the second receptacle (4) in a form-fitting manner in the direction of the first longitudinal axis (22),
wherein the first shaft end (7) has a second longitudinal axis (23) and wherein the first shaft end (7) comprises a first portion (8) and a second portion (9) along the second longitudinal axis (23), wherein the first portion (8) has a circular-cylindrical shape with a round cross section symmetrical to the second longitudinal axis (23), and wherein the second portion (9) has a polygonal cross section, and wherein the first shaft end (7) has a circumferential depression (10) in the first portion (8),
and wherein the coupling (1) comprises means for locking the first shaft end (7) inserted into the second receptacle (4),
wherein the locking means comprise a locking device (14) with a convex structure (18) for engagement in the circumferential depression (10) in the first shaft end (7), in order to prevent the first shaft end (7) of the adapter (2) inserted into the coupling (1) from accidentally falling out of the coupling (1) along the second longitudinal axis (23),
the locking means further comprising at least one locking bolt (15), wherein the locking bolt (15), with the first shaft end (7) inserted into the coupling (1) along the second longitudinal axis (23), is arranged in the second region (9) of the first shaft end (7) and, in a locked state, can produce non-rotational connection, in the direction of the first (22) and second (23) longitudinal axis, between the coupling (1) and the adapter (2).

12. Adapter (2) according to Claim 11, wherein the locking bolt (15) has a first bearing surface (17) and wherein the surface of the first shaft end (7) in the second region (9) with the polygonal cross section forms at least one second bearing surface (11), wherein the first bearing surface (17) of the locking bolt (15) rests on the second bearing surface (11) of the first shaft end (7) in a form-fitting manner in the locked state.

13. Adapter (2) according to Claim 12, wherein the greatest distance of the second bearing surface (11) from the second longitudinal axis is smaller than the radius of the first shaft end (17) in the first portion (8), such that the second bearing surface (11) is radially offset in the direction of the second longitudinal axis (23) and the locking bolt (15), even in the event of incomplete locking, can prevent the inserted adapter (2) from falling out.

14. System comprising a coupling (1) according to one of Claims 1 to 10 and an adapter (2) according to one of Claims 11 to 13 for the releasable, force-fit connection of the coupling (1) to the adapter (2).

15. Method for producing reagents for in vitro diagnostics, the method comprising the following steps:
- providing a vessel,
- filling liquid and/or other ingredients of a reagent into the vessel,
- stirring and/or mixing the contents of the vessel by means of a stirring tool, which is connected to a stirring apparatus by means of a system according to Claim 14,
- further processing of the stirred and/or mixed contents of the vessel to give one or more reagents for in vitro diagnostics.

16. Use of a system according to Claim 14 and/or of a method according to Claim 15 for the production of one or more reagents for in vitro diagnostics.

## Revendications

1. Accouplement (1) comportant un premier logement (3) pour l'arbre d'un agitateur pour la liaison à coopération de force de l'accouplement (1) à l'arbre et un deuxième logement (4) pour un adaptateur (2) d'un outil agitateur, pour la liaison amovible à coopération de force de l'accouplement (1) à l'adaptateur (2), dans lequel l'adaptateur (2) peut être relié à coopération de force à l'outil agitateur,
dans lequel le deuxième logement (4) comprend un évidement en forme de cylindre de section transversale circulaire, qui a un premier axe (22) longitudinal et dans lequel un premier bout (7) de fût de l'adaptateur (2) peut être emmanché à complémentarité de forme dans la direction du premier axe (22) longitudinal, dans lequel le premier bout (7) de fût a un deuxième axe (23) longitudinal, et dans lequel le premier bout (7) de fût comprend, le long du deuxième axe (23) longitudinal, une première partie (8) et une deuxième partie (9),
**caractérisé en ce que** la première partie (8) a une forme cylindrique de section transversale circulaire de symétrie par rapport au deuxième axe (23) longitudinal, et dans lequel la deuxième partie (9) a une section transversale polygonale, et dans lequel le premier bout (7) de fût a, dans la première partie (8), un creux (10) faisant le tour, et dans lequel l'accouplement (1) comprend des moyens d'arrêt du premier bout (7) de fût emmanché dans le deuxième logement (4),
dans lequel les moyens d'arrêt comprennent un dispositif (14) d'arrêt ayant une structure (18) convexe pour pénétrer dans le trou (10) faisant le tour du premier bout (7) de fût, afin d'empêcher une chute intempestive hors de l'accouplement (1) du premier bout (7) de fût, emmanché dans l'accouplement (1), de l'adaptateur (2), le long du deuxième axe (23) longitudinal,
les moyens d'arrêt comprenant en outre au moins un boulon (15) d'arrêt, dans lequel le boulon (15) d'arrêt est, alors que le premier bout (7) de fût est emmanché dans l'accouplement (1), disposé le long du deuxième axe (23) longitudinal dans la deuxième partie (9) du premier bout (7) de fût et peut, dans un état d'arrêt, produire entre l'accouplement (1) et l'adaptateur (2), une liaison résistante à la torsion dans la direction du premier (22) et du deuxième (23) axes longitudinal.

2. Accouplement (1) suivant la revendication 1, dans lequel une pénétration du premier bout (7) de fût de l'adaptateur (2) dans le deuxième logement (4) de l'accouplement (1) peut s'effectuer dans toute orientation relative en ce qui concerne des rotations autour du premier et/ou du deuxième axe (22, 23) longitudinal.

3. Accouplement (1) suivant l'une des revendications précédentes, dans lequel le premier et le deuxième logements (3, 4) sont disposés respectivement concentriquement à un axe de rotation commun.

4. Accouplement (1) suivant l'une des revendications précédentes, dans lequel le premier axe (22) longitudinal est disposé le long de l'axe de rotation et/ou dans lequel le deuxième axe (23) longitudinal est, lorsque le premier bout (7) de fût est emmanché dans l'accouplement (1), disposé le long de l'axe de rotation.

5. Accouplement (1) suivant l'une des revendications précédentes, dans lequel l'arrêt de l'adaptateur (2) au moyen du dispositif d'arrêt, lorsque le premier bout (7) de fût de l'adaptateur (2) a pénétré dans le deuxième logement (4) de l'accouplement (1), peut s'effectuer dans toute orientation relative en ce qui concerne des rotations autour du premier et/ou du deuxième axe (22, 23) longitudinal.

6. Accouplement (1) suivant l'une des revendications précédentes, dans lequel le dispositif (14) d'arrêt comprend une douille de ressort à bille guidé dans un premier creux (5) de l'accouplement (1), dans lequel le premier creux (5) est, de préférence, perpendiculaire au premier axe (22) longitudinal.

7. Accouplement (1) suivant l'une des revendications précédentes, dans lequel le boulon (15) d'arrêt est guidé dans un deuxième creux (6) de l'accouplement (1), dans lequel le deuxième creux (6) est perpendiculaire au premier axe (22) longitudinal.

8. Accouplement (1) suivant l'une des revendications précédentes, dans lequel le boulon (15) d'arrêt a une première surface (17) d'application, et dans lequel la surface du premier bout (7) de fût forme, dans la deuxième partie (9) de section transversale polygonale, au moins une deuxième surface (11) d'application, dans lequel la première surface (17) d'application du boulon (15) d'arrêt s'applique à complémentarité de forme dans l'état arrêté à la deuxième surface (11) d'application du premier bout (7) de fût.

9. Accouplement (1) suivant la revendication 8, dans lequel la première et la deuxième surface (17, 11) d'application sont des surfaces planes.

10. Accouplement (1) suivant l'une des revendications 6 à 9, dans lequel le premier creux (5) et/ou le deuxième creux (6) ont un taraudage et dans lequel la douille de ressort à bille peut se visser dans le premier creux (5) et/ou le boulon (15) d'arrêt peut se visser dans le deuxième creux (6).

11. Adaptateur (2) pour un outil agitateur, pour la liaison amovible à coopération de force d'un accouplement (1) suivant l'une des revendications 1 à 10 à l'adaptateur (2), dans lequel l'adaptateur (2) est relié à coopération de force à un outil agitateur ou peut l'être, l'adaptateur (2) ayant un premier bout (7) de fût, qui peut être emmanché dans le deuxième logement (4) à complémentarité de forme dans la direction du premier axe (22) longitudinal,
dans lequel le premier bout (7) de fût a un deuxième axe (23) longitudinal, et dans lequel le premier bout (7) de fût comprend, le long du deuxième axe (23) longitudinal, une première partie (8) et une deuxième partie (9), dans lequel la première partie (8) a une forme cylindrique de section transversale circulaire de symétrie par rapport au deuxième axe (23) longitudinal, et dans lequel la deuxième partie (9) a une section transversale polygonale, et dans lequel le premier bout (7) de fût a, dans la première partie (8), un creux (10) faisant le tour,
et dans lequel l'accouplement (1) comprend des moyens d'arrêt du premier bout (7) de fût emmanché dans le deuxième logement (4),
dans lequel les moyens d'arrêt comprennent un dispositif (14) d'arrêt ayant une structure (18) convexe pour pénétrer dans le trou (10) faisant le tour du premier bout (7) de fût, afin d'empêcher une chute intempestive hors de l'accouplement (1) du premier bout (7) de fût, emmanché dans l'accouplement (1), de l'adaptateur (2), le long du deuxième axe (23) longitudinal,
les moyens d'arrêt comprenant en outre au moins un boulon (15) d'arrêt, dans lequel le boulon (15) d'arrêt est, alors que le premier bout (7) de fût est emmanché dans l'accouplement (1), disposé le long du deuxième axe (23) longitudinal dans la deuxième partie (9) du premier bout (7) de fût et peut, dans un état d'arrêt, produire entre l'accouplement (1) et l'adaptateur (2), une liaison résistante à la torsion dans la direction du premier et du deuxième (23) axes longitudinaux.

12. Adaptateur (2) suivant la revendication 11, dans lequel le boulon (15) d'arrêt a une première surface (17) d'application, et dans lequel la surface du premier bout (7) de fût forme, dans la deuxième partie (9) de section transversale polygonale, au moins une deuxième surface (11) d'application, dans lequel la première surface (17) d'application du boulon (15) d'arrêt s'applique à complémentarité de forme dans l'état arrêté à la deuxième surface (11) d'application du premier bout (7) de fût.

13. Adaptateur (2) suivant la revendication 12, dans lequel la distance la plus grande de la deuxième surface (11) d'application au deuxième axe longitudinal est plus petite que le rayon du premier bout (17) de fût dans la première partie (8), de sorte que la deuxième surface (11) d'application est décalée radialement en direction du deuxième axe (23) longitudinal et que le boulon (15) d'arrêt peut, même lorsque l'arrêt n'est pas complet, être empêché de tomber de l'adaptateur (2) emmanché.

14. Système comprenant un accouplement (1) suivant l'une des revendications 1 à 10 et un adaptateur (2) suivant l'une des revendications 11 à 13, pour la liaison amovible à coopération de force de l'accouplement (1) à l'adaptateur (2).

15. Procédé de préparation de réactifs pour le diagnostic in vitro, le procédé comprenant les stades suivants
- on se procure un récipient,
- on remplit le récipient de liquide et/ou d'autres substances de continu d'un réactif,
- on agite et/ou on mélange le contenu du récipient au moyen d'un outil agitateur, qui est relié à un agitateur au moyen d'un système suivant la revendication 14,
- on transforme le contenu agité et/ou mélangé du récipient en un ou en plusieurs réactifs de diagnostic in vitro.

16. Utilisation d'un système suivant la revendication 14 et/ou d'un procédé suivant la revendication 15, pour la préparation d'un ou de plusieurs réactifs de diagnostic in vitro.
